(19) Europäisches Patentamt
European Patent Office
Office européen des brevets

(11) Veröffentlichungsnummer: **0 293 815**
**B1**

(12) **EUROPÄISCHE PATENTSCHRIFT**

(45) Veröffentlichungstag der Patentschrift: **07.11.90**

(51) Int. Cl.[5]: **C08F 4/60**, C08F 10/00

(21) Anmeldenummer: **88108658.1**

(22) Anmeldetag: **31.05.88**

(54) **Verfahren zur Herstellung eines 1-Olefinpolymers.**

(30) Priorität: **05.06.87 DE 3718888**

(43) Veröffentlichungstag der Anmeldung:
**07.12.88 Patentblatt 88/49**

(45) Bekanntmachung des Hinweises auf die Patenterteilung:
**07.11.90 Patentblatt 90/45**

(84) Benannte Vertragsstaaten:
**BE DE ES FR GB IT NL**

(56) Entgegenhaltungen:
**EP-A- 0 206 794**

**JOURNAL OF ORGANOMETALLIC CHEMISTRY, Band 125, 1977, Seiten 57-62, Elsevier Sequoia S.A., Lausanne, CH; R. JACKSON et al.: "Silica-supported analogues of titanocene"**
**JOURNAL OF ORGANOMETALLIC CHEMISTRY, Band 315, 1986, Seiten 143-156, Elsevier Sequoia S.A., Lausanne, CH; B.L. BOOTH et al.: "Silica-supported cyclopentadienyl-rhodium(I), -cobalt(I), and -titanium(IV) complexes"**

(73) Patentinhaber: **HOECHST AKTIENGESELLSCHAFT, Postfach 80 03 20, D-6230 Frankfurt am Main 80(DE)**

(72) Erfinder: **Antberg, Martin, Dr., Sachsenring 10, D-6238 Hofheim am Taunus(DE)**
Erfinder: **Lüker, Hartmut, Dr., Königsteiner Str. 13, D-6238 Hofheim am Taunus(DE)**
Erfinder: **Böhm, Ludwig, Dr., Leonhardstr. 36, D-6234 Hattersheim am Main(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung bezieht sich auf ein Verfahren zur Herstellung eines 1-Olefinpolymers unter Verwendung eines Metallocen-Trägerkatalysators.

Metallocene von Übergangsmetallen sind als Katalysatorkomponenten bekannt (vgl. US-PS 4 522 982, US-PS 4 542 199). Zusammen mit Aluminoxanen bilden sie homogene Übergangsmetall-Katalysatoren, welche in aromatischen Kohlenwasserstoffen löslich sind. Diese Katalysatoren sind sehr aktiv. Ihre Löslichkeit ist jedoch ein Nachteil, wenn derartige Katalysatoren in bestehenden technischen Anlagen eingesetzt werden sollen, da diese in der Regel für die Verwendung von heterogenen Katalysatorsystemen eingerichtet sind. Es war daher wünschenswert, Metallocen-Katalysatoren zu finden, welche in Form einer Suspension verwendet werden können.

Bekannt sind Metallocen-Katalysatoren, bei welchen eine Zirkonocen- oder Titanocenkomponente und ein Aluminoxan gemeinsam aus einer Lösung auf einen silikatischen Träger aufgebracht werden (vgl. Europäische Anmeldungsveröffentlichung 206 794). Dieses Katalysatorsystem ist indessen wenig aktiv und hat den Nachteil, daß das Verhältnis Zr oder Ti zu Al während der Polymerisation nicht geändert werden kann. Außerdem sind die Katalysatorkomponenten nicht ausreichend fest auf dem Träger verankert und können somit während der Polymerisation vom heißen Suspensionsmittel extrahiert werden.

Es wurde nun gefunden, daß diese Nachteile vermieden werden können, wenn man nur die Übergangsmetallverbindung auf den Träger aufbringt, und zwar in Form eines siloxan-substituierten Metallocens.

Die Erfindung betrifft somit das in den Ansprüchen beschriebene Verfahren.

Zur Herstellung der Übergangsmetallkomponente des erfindungsgemäß zu verwendenden Katalysators wird eine Metallocen-Verbindung mit einem hydroxylgruppenhaltigen Trägermaterial umgesetzt.

Verwendet wird eine Metallocenverbindung der Formel (I)

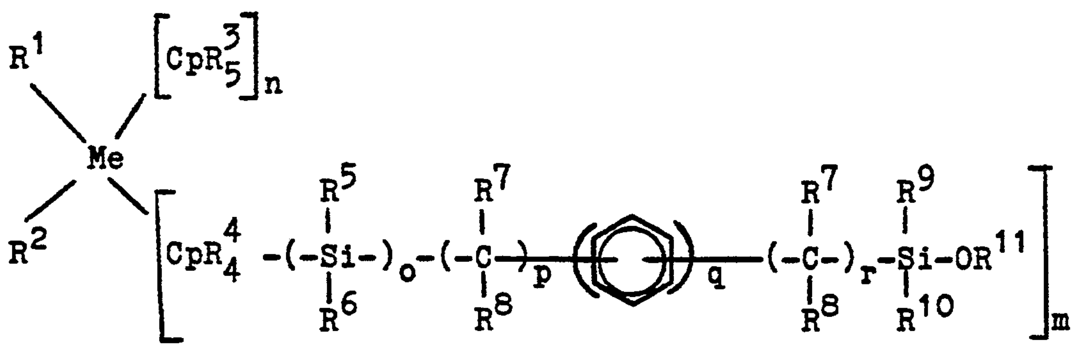

(I),

worin

Me Titan, Zirkonium oder Hafnium, vorzugsweise Zirkonium ist und

Cp den Cyclopentadienylring bedeutet;

$R^1$ und $R^2$ sind unabhängig voneinander ein Wasserstoffatom, ein Halogenatom, eine $C_1$-$C_4$-Alkylgruppe oder eine $C_6$-$C_{10}$-Arylgruppe, vorzugsweise eine Alkylgruppe oder ein Halogenatom, insbesondere in Chloratom;

$R^3$ und $R^4$ bedeuten unabhängig voneinander ein Wasserstoffatom, ein Halogenatom, eine $C_1$-$C_4$-Alkylgruppe, eine $C_1$-$C_4$-Alkoxygruppe, eine $C_6$-$C_{10}$-Arlygruppe oder eine $C_2$-$C_6$-Alkenoxygruppe, vorzugsweise ein Wasserstoffatom oder Methyl, insbesondere ein Wasserstoffatom;

$R^5$ und $R^6$ sind unabhängig voneinander eine $C_1$-$C_4$-Alkylgruppe, eine $C_6$-$C_{10}$-Arylgruppe oder eine $C_1$-$C_4$-Alkoxygruppe, vorzugsweise eine Alkylgruppe, insbesondere Methyl;

$R^7$ und $R^8$ sind unabhängig voneinander ein Wasserstoffatom, eine $C_1$-$C_4$-Alkylgruppe oder eine $C_6$-$C_{10}$-Arylgruppe, vorzugsweise eine Alkylgruppe oder ein Wasserstoffatom, insbesondere ein Wasserstoffatom;

$R^9$ und $R^{10}$ bedeuten unabhängig voneinander eine $C_1$-$C_4$-Alkylgruppe, eine $C_6$-$C_{10}$-Arylgruppe oder eine $C_1$-$C_4$-Alkoxygruppe, vorzugsweise eine Alkylgruppe, insbesondere Methyl;

$R^{11}$ ist eine $C_1$-$C_4$-Alkylgruppe, vorzugsweise Ethyl;

m bedeutet 1 oder 2, vorzugsweise 1,

n ist 2 - m,

o ist null oder 1, vorzugsweise 1,

p ist eine Zahl von null bis 6, vorzugsweise 1,

q ist null oder 1, vorzugsweise null, und

r ist eine Zahl von null bis 6, vorzugsweise 1.

Beispiele für geeignete Metallocenverbindungen der Formel (I) sind

1. 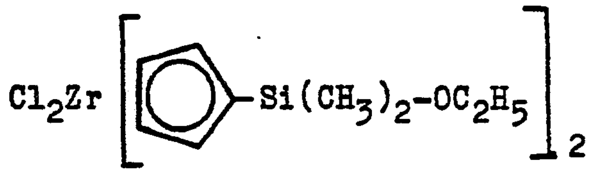

2. 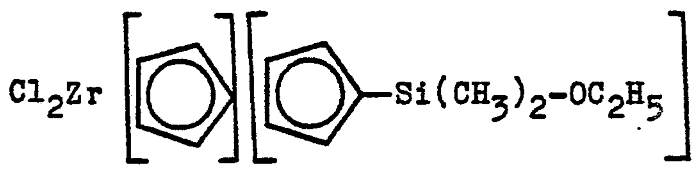

3. 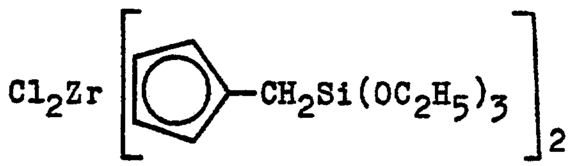

4. 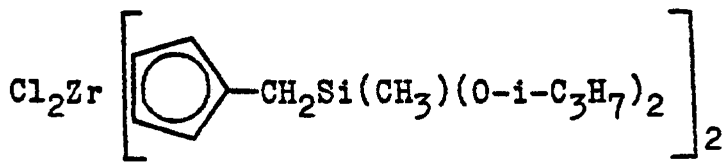

5. 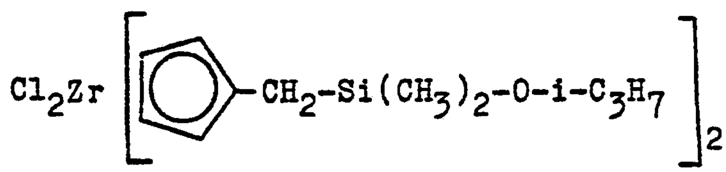

6. 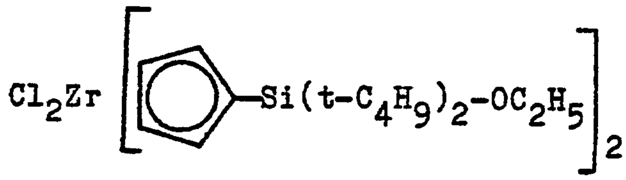

7. 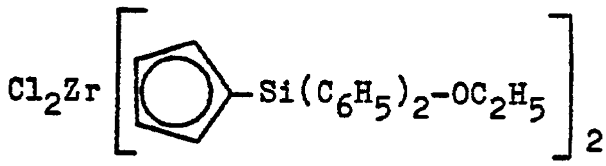

8. 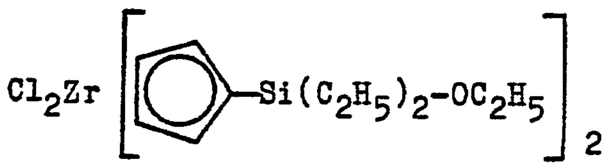

9. 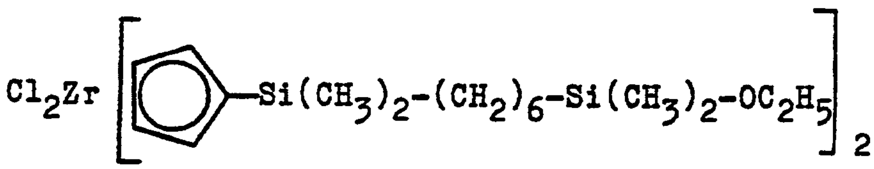

10. 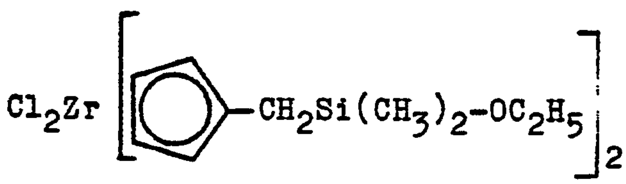

11. 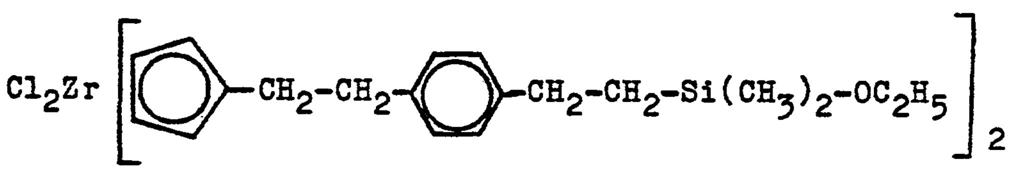

12. 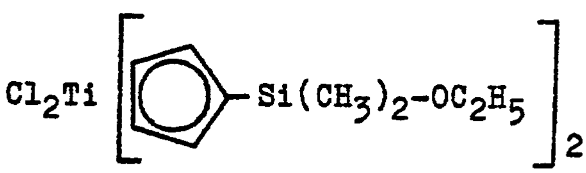

13. 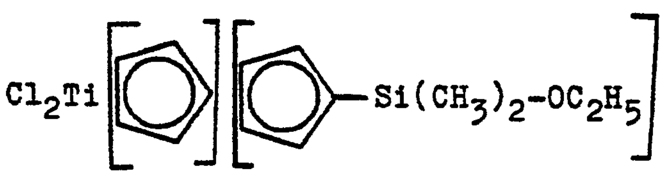

14. 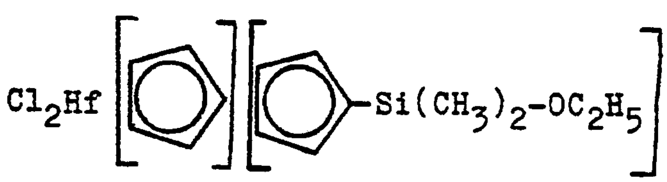

Bevorzugt sind von diesen Verbindungen die Verbindungen Nr. 1, 2, 3 und 4, insbesondere Nr. 2. Verbindungen dieser Art sind beschrieben in
I.B.L. Booth, G.C. Ofume, C. Stacey und P.J.T. Tait in J. Organomet. Chem. 315 (1986), S. 143 - 156,
R. Jackson, J. Ruddlesden, D.J. Thomson und R. Whelan in J. Organomet. Chem. 125 (1977), S. 57 - 62.

Geeignete Trägermaterialien sind anorganische Oxide, Carbonate wie Kreide, Silikate wie Talk und Polymere mit Hydroxylgruppen an der Oberfläche. Besonders geeignete Träger sind poröse Oxide oder Mischoxide des Siliciums und/oder Aluminiums, die eine spezifische Oberfläche von 50 bis 1000 $m^2/g$, vorzugsweise von 100 bis 800, insbesondere von 150 bis 650, aufweisen und deren Porenvolumen im Bereich von 0,2 bis 3, vorzugsweise 0,4 bis 3, insbesondere von 0,6 bis 2,7 $cm^3/g$, liegt. Die Teilchengröße beträgt 1 bis 50 µm, vorzugsweise 10 bis 200 µm, insbesondere 20 bis 100 µm. Die Hydroxylgruppenzahl liegt, je nach der spezifischen Oberfläche und der Temperaturvorbehandlung im Bereich von 0,5 bis 50 mmol, vorzugsweise von 1 bis 20, insbesondere von 1,5 bis 10 Hydroxylgruppen pro Gramm Träger. Solche Oxide werden teilweise speziell im Hinblick auf eine Verwendung als Träger für Trägerkatalysatoren hergestellt und sind im Handel erhältlich.

Vor der Umsetzung des Trägers mit der Metallocen-Verbindung muß durch Trocknen bei einer Temperatur von 120 bis 800°C, vorzugsweise 200 bis 500°C, adsorptiv; gebundenes Wasser entfernt werden, was 1 bis 10 Stunden dauern kann. Die Trocknung wird durch Titration des OH-Gehaltes des Trägermaterials mit n-Butylmagnesiumchlorid analytisch verfolgt. Nach der Trocknung wird der Träger unter Luft- und Wassersausschluß unter einem Inertgas, beispielsweise Stickstoff oder Argon, gelagert.

Die Umsetzung des Trägers mit der Metallocen-Verbindung erfolgt in der Weise, daß man den Träger in dem inerten Lösemittel suspendiert, die gelöste Metallocen-Verbindung bei einer Temperatur von 0 bis 40°C, vorzugsweise 15 bis 25°C, 1 bis 1260 min, vorzugsweise 20 bis 180 min einwirken läßt. Das Verhältnis von Metallocen-Verbindung zu Träger wird in Abhängigkeit vom Hydroxylgruppengehalt so gewählt, daß 10 bis 400, vorzugsweise 200 bis 250 mmol Metallocen-Verbindung pro 100 Gramm Träger eingesetzt werden.

Als Lösemittel eignen sich alle für die Olefin-Polymerisation verwendbaren Lösemittel, so z.B. aliphatische oder cycloaliphatische Kohlenwasserstoffe, beispielsweise Pentan, Hexan, Heptan, Cyclohexan, Methylcyclohexan, aromatische Kohlenwasserstoffe wie Benzol, Toluol, Xylol oder Benzin- bzw. hydrierte Dieselölfraktionen, welche sorgfältig von Sauerstoff, Schwefelverbindungen und Feuchtigkeit befreit worden sind. Bevorzugt werden aliphatische und cycloaliphatische Kohlenwasserstoffe verwendet.

Die zweite Komponente des erfindungsgemäßen Katalysators ist ein Aluminoxan der Formel (II)

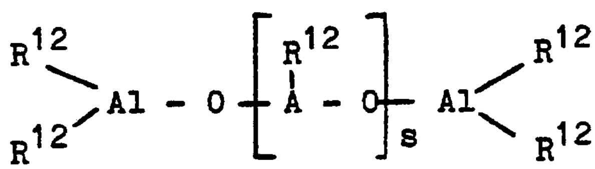

(II)

für den linearen Typ und/oder der Formel (III)

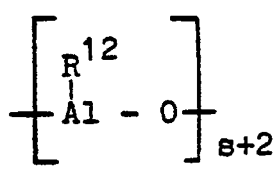

(III)

für den cyclischen Typ. In diesen Formeln bedeuten $R^{12}$ eine $C_1$-$C_6$-Alkylgruppe, vorzugsweise Methyl, Ethyl oder Isobutyl, insbesondere Methyl, und s eine ganze Zahl von 2 bis 40, bevorzugt 10 bis 20.

Das Aluminoxan kann auf verschiedene Art und Weise hergestellt werden.

Bei einem der Verfahren wird fein gepulvertes Kupfersulfat-pentahydrat in Toluol aufgeschlämmt und in einem Glaskolben unter Inertgas bei etwa -20°C mit soviel Aluminiumtrialkyl versetzt, daß für je 4 Al-Atome etwa 1 Mol $CuSO_4 \cdot 5H_2O$ zur Verfügung steht. Nach langsamer Hydrolyse unter Alkan-Abspaltung wird die Reaktionsmischung 24 bis 48 Stunden bei Zimmertemperatur belassen, wobei gegebenenfalls gekühlt werden muß, damit die Temperatur nicht über 30°C ansteigt. Anschließend wird das im Toluol gelöste Aluminoxan von dem Kupfersulfat abfiltriert und das Toluol unter Vakuum abdestilliert. Es wird angenommen, daß bei diesem Herstellungsverfahren die niedermolekularen Aluminoxane unter Abspaltung von Alminiumtrialkyl zu höheren Oligomeren kondensieren.

Weiterhin erhält man Aluminoxane, wenn man bei einer Temperatur von -20 bis 100°C in einem inerten aliphatischen oder aromatischen Lösemittel, vorzugsweise Heptan oder Toluol, gelöstes Aluminiumtrialkyl, vorzugsweise Aliminiumtrialkyl, mit kristallwasserhaltigen Aluminiumsalzen, vorzugsweise Aluminiumsulfat, zur Reaktion bringt. Dabei beträgt das Volumenverhältnis zwischen Lösungsmittel und dem verwendeten Aluminiumalkyl 1:1 bis 50:1 - vorzugsweise 5:1 - und die Reaktionszeit, die durch Abspaltung des Alkans kontrolliert werden kann, 1 bis 200 Stunden - vorzugsweise 10 bis 40 Stunden.

Von den kristallwasserhaltigen Aluminiumsalzen werden insbesondere jene verwendet, die einen hohen Gehalt an Kristallwasser aufweisen. Besonders bevorzugt ist Aluminiumsulfat-Hydrat, vor allem die Verbindungen $Al_2(SO_4)_3 \cdot 18H_2O$ und $Al_2(SO_4)_3 \cdot 16H_6O$ mit dem besonders hohen Kristallwassergehalt von 16 bzw. 18 mol $H_2O$/Mol $Al_2(SO_4)_3$.

Der erfindungsgemäß zu verwendende Katalysator wird zur Polymerisation von 1-Olefinen der Formel $R\text{-}CH{=}CH_2$, in der R Wasserstoff oder einen geradkettigen oder verzweigten Alkylrest mit 1 bis 12 C-Atomen, vorzugsweise 1 bis 6 C-Atomen, eingesetzt, beispielsweise Ethylen, Propylen, Buten-(1), Hexen-(1), 4-Methylpenten-(1), Octen-(1). Besonders bevorzugt sind Ethylen und Propylen.

Die Polymerisation wird in bekannter Weise in Suspension oder in der Gasphase, kontinuierlich oder diskontinuierlich, ein- oder mehrstufig bei einer Temperatur von 0 bis 100°C, vorzugsweise 70 bis 90°C, durchgeführt. Der Druck beträgt 0,5 bis 64 bar. Bevorzugt ist die Polymerisation in dem technisch besonders interessanten Druckbereich von 5 bis 64 bar.

Dabei wird die Übergangsmetallkomponente in einer Konzentration, bezogen auf das Übergangsmetall, von $10^{-3}$ bis $10^{-6}$, vorzugsweise $10^{-4}$ bis $10^{-6}$ mol Ti, Zr oder Hf pro Liter Lösemittel bzw. pro Liter Reaktorvolumen angewendet. Das Aluminoxan wird in einer Konzentration von $10^{-4}$ bis $10^{-1}$, vorzugsweise $10^{-3}$ bis $2 \cdot 10^{-2}$ mol pro Liter Lösemittel bzw. pro Liter Reaktorvolumen verwendet, bezogen auf den Gehalt an Aluminium. Prinzipiell sind aber auch höhere Konzentrationen möglich.

Die Polymerisation wird in einem für das Ziegler-Niederdruckverfahren gebräuchlichen inerten Lösemittel durchgeführt, beispielsweise in einem aliphatischen oder cycloaliphatischen Kohlenwasserstoff; als solcher sei beispielsweise Butan, Pentan, Hexan, Heptan, Isooctan, Cyclohexan, Methylcyclohexan genannt. Weiterhin kann eine Benzin- bzw. hydrierte Dieselölfraktion, die sorgfältig von Sauerstoff, Schwefelverbindungen und Feuchtigkeit befreit worden ist, benutzt werden. Brauchbar ist auch Toluol. Schließlich kann auch das zu polymerisierende Monomere als Lösemittel oder Suspensionsmittel eingesetzt werden. Das Molekulargewicht des Polymerisats kann in bekannter Weise geregelt werden; vorzugsweise wird dazu Wasserstoff verwendet.

Der erfindungsgemäß zu verwendende Katalysator zeichnet sich dadurch aus, daß die Übergangsmetallverbindung fest mit dem Trägermaterial verbunden ist. Es konnte nachgewiesen werden, daß bei der Umsetzung der Metallocen-Verbindung mit dem Trägermaterial Alkohol gebildet wird, beispielsweise nach folgendem Schema:

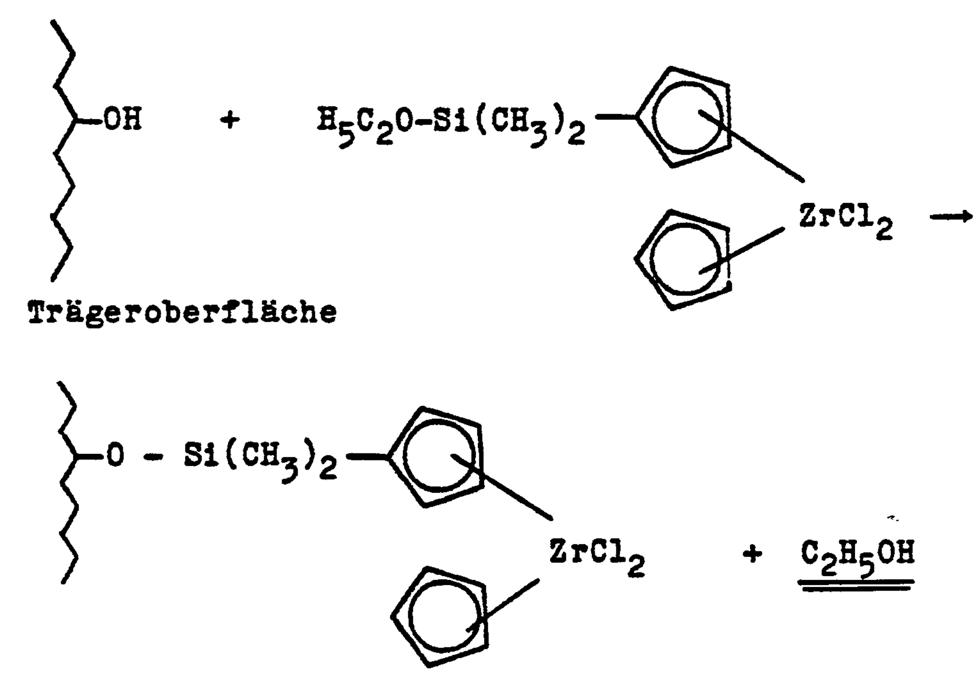


Mit Hilfe des erfindungsgemäß zu verwendenden Katalysators werden außerordentlich hohe Ausbeuten erzielt.

Die nachfolgenden Beispiele sollen die Erfindung erläutern.

Beispiel 1

(Herstellung eines bevorzugten Metallocens)

Cyclopentadienyl [(dimethylethoxysilyl)cyclopentadienyl]-zirkoniumdichlorid

9,36 g (45,35 mmol) Kaliumdimethylethoxysilylcyclopentadienid in 30 $cm^3$ Tetrahydrofuran wurden bei -50°C zu einer Suspension von 11,3 g (43,02 mmol) Cyclopentadienylzirkoniumtrichlorid in 100 $cm^3$ Tetrahydrofuran innerhalb von 1 h zugetroptf. Nach 2 h Rühren bei -20°C wurde der Ansatz auf Raumtemperatur erwärmt und über Nacht weitergerührt. Der Ansatz wurde filtriert, das Filtrat eingedampft und der Rückstand mit Pentan extrahiert. Aus dem filtrierten und eingeengten Pentan-Extrakt kristallisierten beim Abkühlen weiße Nadeln aus, welche abgetrennt, mit kaltem Pentan gewaschen und im Vakuum getrocknet wurden.
Ausbeute 3,75 g (7,55 mmol = 34 % Th.)
Elementaranalyse und $^1$H-NMR-Spektrum standen im Einklang mit der oben angegebenen Struktur.

Beispiel 2

5,47 g Siliciumdioxid (0,88 mmol OH-Gruppen/g) wurden in 30 $cm^3$ Toluol suspendiert. Innerhalb von 15 min wurden bei 0°C 0,9 g (2,28 mmol) $Cl_2Zr(C_5H_5)(C_5H_4\text{-}Si(CH_3)_2\text{-}OC_2H_5$, gelöst in 20 ml Toluol, zugegeben. Nachdem der Ansatz sich auf Raumtemperatur erwärmt hatte, wurde er noch weitere 14 h gerührt. Der Feststoff wurde abgetrennt, dreimal mit je 20 $cm^3$ Diethylether gewaschen und im Vakuum getrocknet. Zur Entfernung nicht chemisch gebundenen Metallocens wurde der Feststoff 24 h im Soxhlet mit Benzol extrahiert und anschließend im Hochvakuum getrocknet. Zr-Gehalt 2,7 Gew.-%.

Beispiel 3

In einem 1 $dm^3$ Polymerisationsreaktor wurden 750 $cm^3$ einer Dieselölfraktion (Kp 100 bis 120°C) vorgelegt und auf 70°C geheizt. Der Reaktor wurde mit 6,4 $cm^3$ einer Methylaluminoxanlösung, die 0,22 mmol Aluminium enthielt, und mit 67 mg (0,02 mmol Zr) der Übergangsmetallkomponente aus Beispiel 2 in 10 $cm^3$ Lösemittel beschickt. Dann wurde Ethylen bis zu einem Enddruck von 7 bar eingeleitet und 1 Stunden polymerisiert. Man erhielt 60,6 g Polyethylen entsprechend

$$\frac{kg}{mmol\ Zr.h} \quad .$$

Das erhaltene Produkt war durch folgende Daten gekennzeichnet:
MFI 190/21,60,09 g/10 min
VZ600 $cm^3$/g
Dichte0,946 g/$cm^3$.

Beispiel 4

Es wurde gearbeitet wie in Beispiel 3, nur betrug die Einsatzmenge der Übergangsmetallkomponente jetzt 0,01 mmol, bezogen auf Zirkon.
Ausbeute 42 g ; MFI 190/21,60,09g/10 min
VZ600 $cm^3$/g
Dichte0,946 g/$cm^3$
KA4,2 kg/mmol

Beispiel 5

Es wurde gearbeitet wie in Beispiel 3, nur wurden nach Zugabe der Katalysatorkomponenten 9,8 $cm^3$ 1-Buten (106 mmol) in den Reaktor eingeführt und anschließend der Ethylendruck wieder auf 7 bar eingestellt.
Ausbeute 36 g; MFI 190/21,60,15g/10 min
VZ400 $cm^3$/g
Dichte0,942 g/$cm^3$
KA1,8 kg/mmol

Vergleichsbeispiel A

Aus den Angaben in EP 206 794 (Beispiel 1) wurde die Ausbeute berechnet, welche deutlich unter dem Niveau der erfindungsgemäßen Beispiele liegt.
Zirkoniumkonzentration (mmol)0,034
Aluminiumkonzentration (mmol Al)0,83
Aluminium/Zirkonium (mol:mol)24,4
Ethylendruck (bar)13,8
Temperatur (°C)85
Ausbeute (kg)0,0123
Kontaktausbeute (kg/mmol Zr)0,36

Beispiel 6

Es wurde gearbeitet wie in Beispiel 3, jedoch wurde anstelle der Zr-Übergangsmetallkomponente die analoge Ti-Komponente in einer Menge von 40 mg (0,02 mmol Ti) eingesetzt. Der Ti-Gehalt der Komponente betrug 2,4 Gew.-%.
Ausbeute 28 g PE entsprechend einer Kontaktausbeute von 1,4 kg PE/mmol Ti.
MFI 190°C/21,6 0,07 g/10 min
Viskositätszahl 720 $cm^3/g$
Dichte 0,948 $g/cm^3$

Beispiel 7

Es wurde gearbeitet wie in Beispiel 3, jedoch wurde anstelle der Zr-Übergangsmetallkomponente die analoge Hf-Komponente in einer Menge von 137 mg (0,02 mmol Hf) eingesetzt. Der Hf-Gehalt der Komponente betrug 2,6 Gew.-%.
Ausbeute 12 g PE entsprechend einer Kontaktausbeute von 0,6 kg PE/mmol Hf.
MFI 190°C/21,6 0,06 g/10 min
Viskositätszahl 810 $cm^3/g$
Dichte 0,947 $g/cm^3$

**Patentansprüche**

1. Verfahren zur Herstellung eines 1-Olefinpolymers durch Polymerisation eines 1-Olefins der Formel $R\text{-}CH{=}CH_2$, worin R Wasserstoff oder eine geradkettige oder verzweigte Alkylgruppe mit 1 bis 12 C-Atomen ist, bei einer Temperatur von -60 bis 100°C, bei einem Druck von 0,5 bis 64 bar, in Suspension oder in der Gasphase, in Gegenwart eines Katalysators, welcher aus einer Übergangsmetallkomponente, die eine auf einem Träger befindliche Übergangsmetallverbindung darstellt, und einem Aluminoxan besteht, dadurch gekennzeichnet, daß die Polymerisation in Gegenwart eines Katalysators durchgeführt wird, dessen Übergangsmetallkomponente in der Weise hergestellt wurde, daß eine Metallocen-Verbindung der Formel I

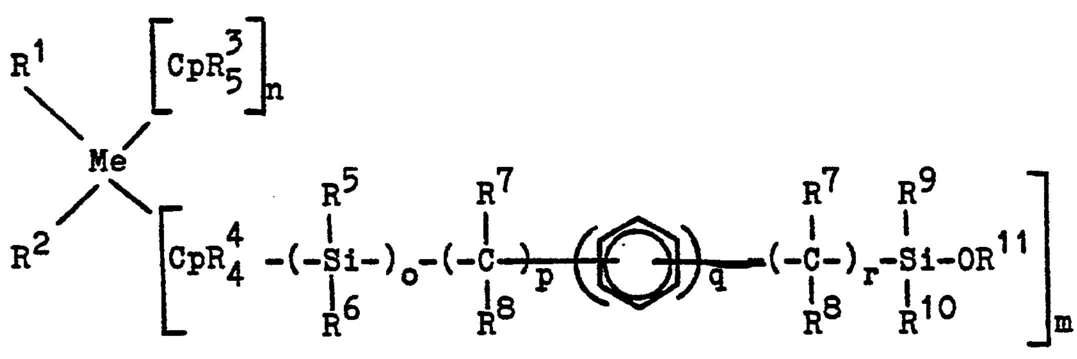

(I),

worin
Me Titan, Zirkonium oder Hafnium ist,
Cp den Cyclopentadienylring bedeutet,
$R^1$ und $R^2$ unabhängig voneinander ein Wasserstoffatom, ein Halogenatom, eine $C_1$-$C_4$-Alkylgruppe

oder eine $C_6$-$C_{10}$-Arylgruppe bedeuten,
$R^3$ und $R^4$ unabhängig voneinander ein Wasserstoffatom, ein Halogenatom, eine $C_1$-$C_4$-Alkylgruppe, eine $C_1$-$C_4$-Alkoxygruppe, eine $C_6$-$C_{10}$-Arylgruppe oder eine $C_2$-$C_6$-Alkenoxygruppe bedeuten,
$R^5$ und $R^6$ unabhängig voneinander eine $C_1$-$C_4$-Alkylgruppe, eine $C_6$-$C_{10}$-Arylgruppe oder eine $C_1$-$C_4$-Alkoxygruppe bedeuten,
$R^7$ und $R^8$ unabhängig voneinander ein Wasserstoffatom, eine $C_1$-$C_4$-Alkylgruppe oder eine $C_6$-$C_{10}$-Arylgruppe bedeuten,
$R^9$ und $R^{10}$ unabhängig voneinander eine $C_1$-$C_4$-Alkylgruppe, eine $C_6$-$C_{10}$-Arylgruppe oder eine $C_1$-$C_4$-Alkoxygruppe bedeuten,
$R^{11}$ eine $C_1$-$C_4$-Alkylgruppe bedeutet,
m 1 oder 2 ist,
n 2 - m ist,
o null oder 1 ist,
p eine Zahl von null bis 6 ist,
q null oder 1 ist,
r eine Zahl von null bis 6 ist,
mit einem hydroxylgruppenhaltigen Trägermaterial umgesetzt wurde,
und wobei das Aluminoxan ein solches der Formel II

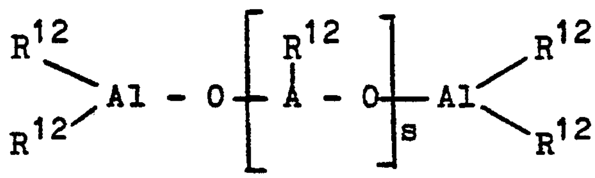

(II)

für den linearen Typ und/oder der Formel (III)

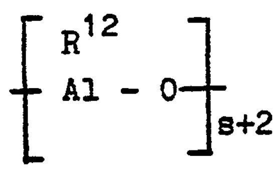

(III)

für den cyclischen Typ ist, wobei in den Formeln II und III $R^{12}$ eine $C_1$-$C_6$-Alkylgruppe bedeutet und s eine ganze Zahl von 2 bis 40 ist.

2. Verfahren nach Anspruch 1, dadurch gekennzeichnet, daß als Übergangsmetallkomponente das Reaktionsprodukt zwischen einer Metallocen-Verbindung der Formel (I), worin Me Titan oder Zirkonium ist, und einem Metalloxid verwendet wird.

3. Verfahren nach Anspruch 2, dadurch gekennzeichnet, daß als Übergangsmetallkomponente das Reaktionsprodukt zwischen einer Zirkon-Verbindung der Formel (I) und Siliciumdioxid verwendet wird.

## Claims

1. A process for the preparation of a 1-olefin polymer by polymerizing a 1-olefin of the formula $R-CH=CH_2$ in which R is hydrogen or a straight-chain or branched alkyl group having 1 to 12 carbon atoms, at a temperature of –60 to 100°C, at a pressure of 0.5 to 64 bar, in suspension or in the gas phase, in the presence of a catalyst which comprises a transition metal component, which is a transition metal compound located on a support, and an aluminoxane, wherein the polymerization is carried out in the presence of a catalyst whose transition metal component has been prepared by reacting a metallocene compound of the formula

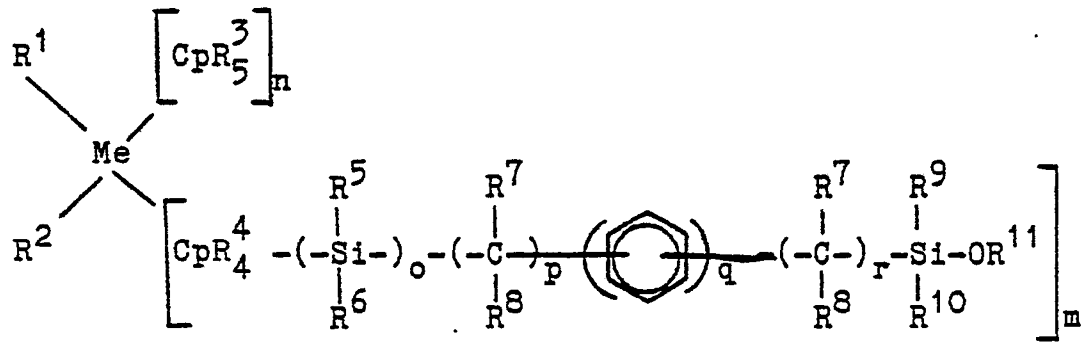

(I),

in which

Me is titanium, zirconium or hafnium,

Cp denotes the cyclopentadienyl ring.

$R^1$ and $R^2$, independently of one another, denote a hydrogen atom, a halogen atom, a $C_1$–$C_4$-alkyl group or a $C_6$–$C_{10}$-aryl group,

$R^3$ and $R^4$, independently of one another, denote a hydrogen atom, a halogen atom, a $C_1$–$C_4$-alkyl group, a $C_1$–$C_4$-alkoxy group, a $C_6$–$C_{10}$-aryl group or a $C_3$–$C_6$-alkenoxy group,

$R^5$ and $R^6$, independently of one another, denote a $C_1$–$C_4$-alkyl group, a $C_6$–$C_{10}$-aryl group or a $C_1$–$C_4$-alkoxy group,

$R^7$ and $R^8$, independently of one another, denote a hydrogen atom, a $C_1$–$C_4$-alkyl group or a $C_6$–$C_{10}$-aryl group,

$R^9$ and $R^{10}$ independently of one another, denote a $C_1$–$C_4$-alkyl group, a $C_6$–$C_{10}$-aryl group or a $C_1$–$C_4$-alkoxy group,

$R^{11}$ denotes a $C_1$–$C_4$-alkyl group,

m is 1 or 2,

n is 2 – m,

o is zero or 1,

p is a number from zero to 6,

q is zero or 1, and

r is a number from zero to 6,

with a hydroxyl group-containing support material, and the aluminoxane is one of the formula II

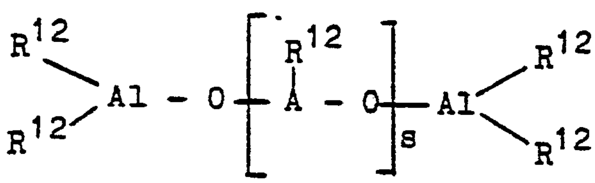

(II)

for the linear type and/or of the formula (III)

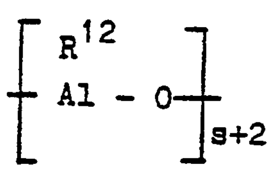

(III)

for the cyclic type, where, in the formulae II and III, $R^{12}$ denotes a $C_1$–$C_6$-alkyl group and s is an integer from 2 to 40.

2. The process as claimed in claim 1, wherein the transition metal component used is the product of the reaction between a metallocene compound of the formula (I) in which Ne is titanium or zirconium, and a metal oxide.

3. The process as claimed in claim 2, wherein the transition metal component is the product of the reaction between a zirconium compound of the formula (I) and silicon dioxide.

**Revendications**

1. Procédé pour préparer un polymère d'α-oléfine par polymérisation d'une α-oléfine de formule R–CH=$CH_2$ dans laquelle R représente l'hydrogène ou un radical alkyle, linéaire ou ramifié, contenant de 1 à 12 atomes de carbone, à une température de –60 à 100°C, sous une pression de 0,5 à 64 bar, en suspension ou en phase gazeuse, en présence d'un catalyseur constitué d'une composante à métal de transition, qui est un composé d'un métal de transition appliqué sur un support, et d'un aluminoxane, procédé caractérisé en ce qu'on effectue la polymérisation en présence d'un catalyseur dont la composante à métal de transition a été préparée par réaction, avec une matière support contenant des radicaux hydroxy, d'un métallocène répondant à la formule I:

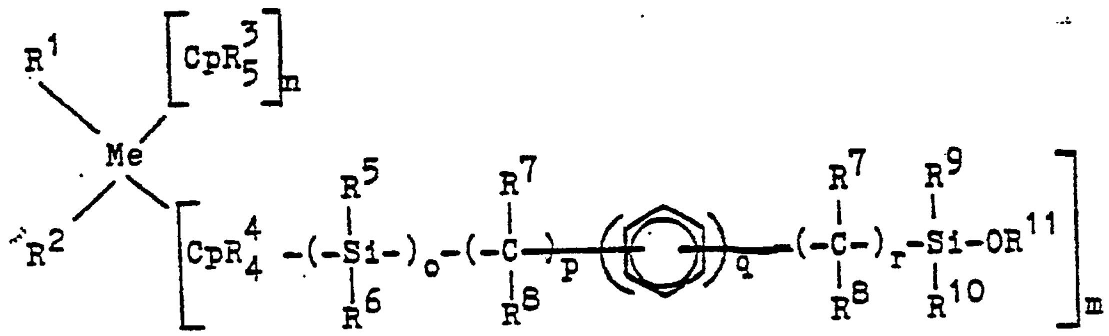

(I),

dans laquelle

Me représente le titane, le zirconium ou l'hafnium,
Cp représente le cycle cyclopentadiényle,
$R^1$ et $R^2$ représentent chacun, indépendamment l'un de l'autre, un atome d'hydrogène, un atome d'halogène, un alkyle en $C_1$–$C_4$ ou un aryle en $C_6$–$C_{10}$,
$R^3$ et $R^4$ représentent chacun, indépendamment l'un de l'autre, un atome d'hydrogène, un atome d'halogène, un alkyle en $C_1$–$C_4$, un alcoxy en $C_1$–$C_4$, un aryle en $C_6$–$C_{10}$ ou un alcényloxy en $C_2$–$C_6$,
$R^5$ et $R^6$ représentent chacun, indépendamment l'un de l'autre, un alkyle en $C_1$–$C_4$, un aryle en $C_6$–$C_{10}$ ou un alcoxy en $C_1$–$C_4$,
$R^7$ et $R^8$ représentent chacun, indépendamment l'un de l'autre, un atome d'hydrogène, un alkyle en $C_1$–$C_4$ ou un aryle en $C_6$–$C_{10}$,
$R^9$ et $R^{10}$ représentent chacun, indépendamment l'un de l'autre, un alkyle en $C_1$–$C_4$, un aryle en $C_6$–$C_{10}$ ou un alcoxy en $C_1$–$C_4$,
$R^{11}$ représente un alkyle en $C_1$–$C_4$,
m est égal à 1 ou à 2,
n est égal à (2 – m),
o est égal à 0 ou à 1,
p désigne un nombre de 0 à 6,
q est égal à 0 ou à 1, et
r désigne un nombre de 0 à 6,
et en ce que l'aluminoxane est un aluminoxane répondant, s'il est du type linéaire, à la formule II:

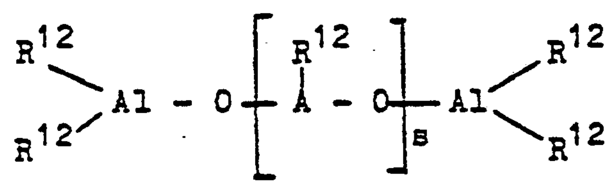

(II)

et/ou, s'il est du type cylique, à la formule III:

$$-\left[\overset{R^{12}}{\underset{}{Al}} - O\right]_{s+2}- \qquad (III)$$

formules dans lesquelles $R^{12}$ représente un alkyle en $C_1$ à $C_6$ et s désigne un nombre entier de 2 à 40.

2. Procédé selon la revendication 1 caractérisé en ce qu'on utilise, comme composante à métal de transition, le produit provenant de la réaction d'un métallocène de formule (I) dans lequel Me représente le titane ou le zirconium, avec un oxyde de métal.

3. Procédé selon la revendication 2 caractérisé en ce qu'on utilise, comme composante à métal de transition, le produit résultant de la réaction d'un composé du zirconium de formule (I) avec la silice.